# EUROPEAN PATENT SPECIFICATION

(11) **EP 0 874 557 B1**
(45) Date of publication and mention of the grant of the patent: **15.11.2000**
(21) Application number: 97900487.6
(22) Date of filing: 10.01.1997
(51) Int. Cl.: A23L 1/19, A23C 11/06, A23P 1/16

(54) **POWDER-FORM FOAMING CREAMER**
PULVERFÖRMIGE,SCHÄUMENDE SAHNE
COLORANT MOUSSANT PULVERULENT

(30) Priority: 16.01.1996 PL 31236396
(43) Date of publication of application: 04.11.1998
(73) Proprietor: Maspex - Spolka Z O.O., 34-100 Wadowice (PL)
(72) Inventor: STUGLIK, Zdzislaw, PL-34-120 Andrychow (PL)
(74) Representative: Needle, Jacqueline
(86) International application number: PL9700001
(87) International publication number: WO9725882

(56) References cited:
- EP-A- 0 154 192
- EP-A- 0 458 310
- EP-A- 0 579 328
- GB-A- 819 078
- US-A- 4 438 147

## Description

This invention provides a powder-form, foaming creamer, allowing after addition of hot water, for self-forming of creamy foam on the surface of the beverage.

There are numerous, known powder-form croamers providing foam on the surface of various hot coffee and cocoa beverages, or soups.

EP 154,192 discloses a process for preparing a powder-form composition for a beverage, which composition contains fat, protein, lactose and other hydrocarbons, as well as 0.3 - 1.0 % by weight of a stabilizing salt, such as phosphate or citrate, said salt providing stability against coagulation.

US 4,438,147 discloses a foaming powder-form creamer; for the preparation of this creamer a liquid mixture, comprising water and solids, is used, said solids containing about 5% non-dairy fat, about 30% water-soluble non-dairy carbohydrate and between 0% and 50% skim milk, as well as proteinaceous foam stabilizer, i.e. sodium caseinate. The mixture is blended with an inert gas and spray-dried.

EP 458,310 B1 discloses a foaming creamer in powderform, which contains fat, lactose, alkali metal phosphate, dry solids of skim milk and caseinate as a foam stabilizer.

A foaming powder-form creamer according to European application 0579328 A1 contains 5 - 40% by weight of fat, 30 - 80% by weight of carbohydrate, 1 - 10% by weight of egg-albumen and 0 - 4% by weight of stabilizing salt, said percentages being based on the sum of the amounts of these components.

According to British patent application GB 2131669 edible product which can be whipped up to a mousse contains 10 to 80% by weight of fat, 0.15 to 10% by weight of binder, 0.5 to 10% by weight of emulsifier and sugar or another natural or artificial sweetener. Said sweetener contains flavours, egg-albumen and/or dairy components.

According to British patent GB 819078 there is known a dry mix for preparing a chiffon dessert preparation comprising among other things 0,5 to 1,5 parts by weight partially degraded soy protein and 2,5 to 7,7 parts by weight gelatine.

All the known creamers give less uniform and more rapidly disappearing foam which is caused by the bursting of bubbles. It was also found that egg-albumen used in the know creamers adds strange flavour to the beverage after pouring in hot water; in the case of present invention that problem is absent.

A powder-form, foaming creamer according to the invention contains vegetable fat such as palm, coconut or soya oil in the amount of about 10 to 40 % by weight, preferably 20 to 30 % by weight, having melting point of 31°C to 45°C; dairy fat in the amount of about 0.06 to 0.1 % by weight; carbohydrates in the form of maltodextrin having a DE value of 20 to 35 in the amount of about 30 to 60 % by weight, preferably having a DE value of more than 24 arid in the amount of 45 to 60 % by weight, or a glucose syrup having a DE value of 30 to 50 in the amount of about 40 to 75 % by weight, or lactose in the amount of about 30 to 60 % by weight; whey-protein and casein, where the source of the above proteins is a dry skim milk having fat content below 0.6 % by weight and a WPNI value of 4.0 to 4.8, and the amount of powder should be of about 10 to 40 % by weight, preferably 12 to 17 % by weight; stabilizing salts in the form of dibasic potassium orthophosphate in the amount of about 0.5 to 3.0 % by weight, preferably 1.5 to 2.5 % by weight; and natural hydro-colloids in the form of gelatine in the amount of about 0.1 to 1.0 % by weight, preferably 0.2 to 0.5 % by weight, introduced in the form of aqueous solution, previous to the process of pasteurization and homogenization of the creamer. Creamer according to the invention comprises no egg-albumen.

A creamer according to the invention is obtained by dissolution of dry components in water having a temperature of 70°C. To this solution a vegetable fat having a temperature of 80°C is added, and next an aqueous solution of gelatine. The obtained creamer is pasteurized at 65°C to 85°C, then inert gas is introduced under low pressure. Concentrate and gas are homogenized under pressure of 8.0 to 10.0 MPa, then forced into a spraying device, and dried in the stream of warm air. Obtained this way dry creamer comprises no egg-albumen and gets spontaneous foamed after addition of hot water

Powder-form, foaming creamer according to the invention provides, after addition of hot water, a layer of delicate, creamy foam on the surface of beverage, said foam being uniform, stable and lasting in practically unchanged form for about 15 minutes. Application of gelatine as a foam stabilizer eliminates strange flavour after pouring in hot water which is present in the case of application of egg-albumen.

### Example:

The invention is illustrated by the present example:
47.5 % by weight of maltodextrin having a DE value of 30, 20 % by weight of skim milk and 2 % by weight of dibasic potassium orthophosphate were dissolved in water having a temperature of 70°C. To the obtained solution palm oil in the amount of 30 % by weight having a temperature of 80°C was adding, carefully stirring, and dissolved in water gelatine in the amount of 0.5 % by weight. Obtained concentrate was pasteurized at 85°C, then to the mixture having a temperature of 50°C an inert gas was introduced under low pressure. Concentrate with gas were homogenized under pressure of 10.0 MPa. Obtained concentrate containing 50 % of dry mass and 50 % of water was dried in the stream of hot air.

## Claims

1. Powder-form, foaming creamer containing fat, carbohydrates, protein and stabilizing salts, and gelatine in the amount of about 0.1 to 1.0 % by weight, preferably 0,2 to 0,5 % by weight, said gelatine being introduced in the form of an aqueous solution, previous to the process of pasteurization and homogenization of the creamer, said creamer being free from egg-albumen and after addition of hot water gets spontaneous foamed.

## Patentansprüche

1. Pulverförmige, schäumende Sahne, enthaltend Fett, Kohlehydrate, Protein und stabilisierende Salze sowie Gelatine in der Menge von ca. 0,1 bis 1,0 Gew.%, vorzugsweise 0,2 bis 0,5 Gew.%, wobei die Gelatine in der Form einer wässrigen Lösung vor dem Pasteurisierungs- und Homogenisierungsprozeß der Sahne zugeführt wird, wobei die Sahne frei von Eieralbumin ist und nach Zugabe von heißem Wasser spontanschäumend wird.

## Revendications

1. Succédané de crème moussant, sous forme de poudre, contenant des matières grasses, des hydrates de carbone, des protéines et des sels stabilisants, et de la gélatine en une quantité d'environ 0,1 à 1,0% en poids, de préférence 0,2 à 0,5% en poids, ladite gélatine étant introduite sous la forme d'une solution aqueuse, avant le procédé de pasteurisation et d'homogénéisation du succédané de crème, ledit succédané de crème étant exempt d'albumen d'oeuf et qui, après addition d'eau chaude, mousse de façon spontanée.
